# FASCICULE DE BREVET EUROPEEN

(11) **EP 1 812 807 B1**
(45) Date de publication et mention de la délivrance du brevet: **29.09.2010**
(21) Numéro de dépôt: 05784513.3
(22) Date de dépôt: 19.08.2005
(51) Int. Cl.: G01S 7/41, G01S 13/524

(54) **PROCEDE DE GESTION DE FORME D ' ONDE UTILISANT UNE CARTOGRAPHIE DOPPLER PAR SEGMENTATION STATISTIQUE**
WELLENFORM-VERWALTUNGSVERFAHREN MIT EINER DOPPLER-ABBILDUNG DURCH STATISTISCHE SEGMENTIERUNG
WAVEFORM MANAGEMENT METHOD USING A DOPPLER MAPPING BY STATISTICAL SEGMENTATION

(30) Priorité: 06.09.2004 FR 0409429
(43) Date de publication de la demande: 01.08.2007
(73) Titulaire: THALES, 92200 Neuilly sur Seine (FR)
(72) Inventeur: BARBARESCO, Frédéric, F-91230 MONTGERON (FR); BRUNEL, Nicolas, F-92160 ANTONY (FR)
(74) Mandataire: Lucas, Laurent Jacques
(86) Numéro de dépôt international: PCT/EP2005/054105
(87) Numéro de publication internationale: WO 2006/029951

(56) Documents cités:
- BARBARESCO F.: "Statistical Segmentation of radar images" 1993, IEE SEMINAR ON TEXTURE ANALYSIS IN RADAR AND SONAR IEE LONDON, UK, PAGE(S) 11/1 - 14 , LONDON , XP002317243 page 9, alinéa 1.2.1 - page 13
- BARBARESCO F ET AL: "Motion-based segmentation and tracking of dynamic radar clutters" PROCEEDINGS OF THE INTERNATIONAL CONFERENCE ON IMAGE PROCESSING (ICIP) LAUSANNE, SEPT. 16 - 19, 1996, NEW YORK, IEEE, US, vol. VOL. 1, 16 septembre 1996 (1996-09-16), pages 923-926, XP010202546 ISBN: 0-7803-3259-8
- BARBARESCO F ET AL: "Intelligent radar management by advanced beamscheduling algorithms based on short-time planning & constraints relaxation strategies" 14 octobre 2003 (2003-10-14), , PAGE(S) 283-288 , XP010676755 le document en entier

## Description

L'invention se rapporte au domaine de la surveillance et de la détection radar. Elle traite en particulier de la difficulté d'assurer une bonne détection et un bon suivi de cibles dont la trajectoire traverse différentes zones de fouillis. L'invention décrite entre dans le domaine plus particulier des procédés de traitement des signaux radar. Elle peut néanmoins également trouver une application pour d'autres systèmes de détection électromagnétiques.

Dans la plupart des systèmes de détection modernes, une de tâches principales consiste non seulement à détecter les cibles présentant un intérêt, mais aussi d'assurer un suivi convenable de leur évolution dans le domaine couvert par le système de détection considéré. A cet effet ces systèmes sont équipés de moyen de traitement du signal reçu permettant de filtrer le fouillis et de détecter les signaux pouvant provenir d'une cible. Ils sont également pourvus de moyens de pistage permettant de corréler les échos semblant provenir d'une même cible en mouvement et d'en mémoriser la trajectoire correspondante. Ces actions sont communément regroupées sous le terme de pistage.

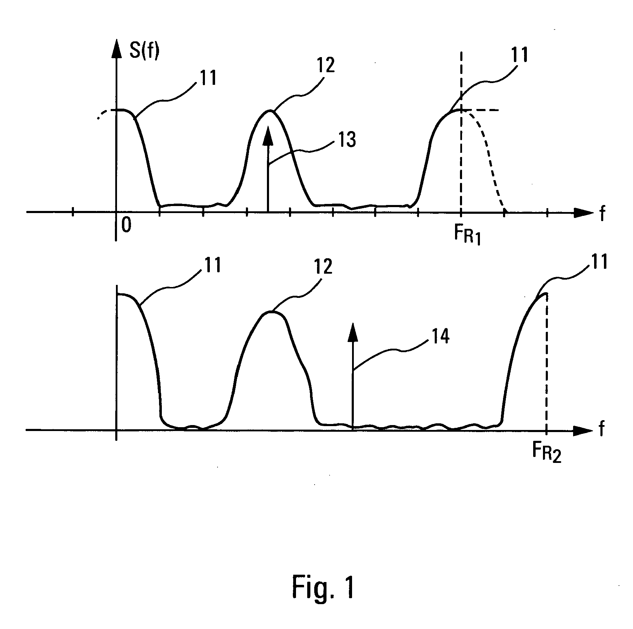

L'élimination des fouillis est plus particulièrement réalisée au niveau de la fonction de filtrage doppler qui permet de caractériser un signal reçu par son spectre. Ce spectre est notamment fonction des paramètres de déplacement de l'objet à l'origine du signal. Une difficulté connue du filtrage réside dans le fait que dans certains cas, du fait de la répétitivité du spectre obtenu par filtrage doppler, le spectre doppler réel d'une cible, dont la fréquence doppler est largement supérieure à F_{R}, subit un phénomène de repliement, modulo la fréquence de répétition F_{R} du radar. Ce spectre replié peut alors se superposer au spectre d'une zone de fouillis dont le niveau peut être assez fort pour le masquer. Par fouillis on entend de manière convenue le signal réfléchi par tout élément ne constituant par à proprement parler une cible dans le cas d'utilisation considéré. Ce peut être par exemple le signal réfléchi par des éléments de relief, des constructions, des étendues d'eau, de la végétation ou encore de phénomènes atmosphériques tels que des nuages. Cette difficulté est illustrée par la figure 1. Dans un tel cas, l'analyse doppler ne permet pas d'éliminer le fouillis sans éliminer du même coup le signal utile. Ce phénomène peut être très préjudiciable, par exemple dans le cas ou il s'agit d'une cible dont on effectue le pistage et dont la trajectoire traverse une zone de fouillis atmosphérique, par exemple des nuages denses. Il y a dans ce cas un risque important de perdre la trace de la cible pistée.

Une solution possible pour éviter l'apparition d'un tel cas consiste à profiter du caractère faiblement mobile des fouillis qui rend leur spectre généralement dépourvu d'ambiguïté doppler et de choisir en présence de fouillis ayant une vitesse donnée, une forme d'onde permettant d'éviter la superposition du spectre du fouillis avec le spectre de la cible vu entre zéro et F_{R}. Ce type de solution est applicable seulement si l'on connaît à priori pour la direction de l'espace considérée la nature du fouillis présent dans cette zone. Ce principe conduit à établir pour l'ensemble de l'espace couvert par le système de détection, radar par exemple, une carte dynamique des zones de fouillis présentes. Ainsi, connaissant les paramètres du fouillis présent dans une zone donnée et connaissant les paramètres d'une cible entrant dans cette zone, il est possible d'adapter en conséquence la forme d'onde pour éviter une élimination du signal correspondant à cette cible par le filtrage doppler.

Pour établir une cartographie des zones de fouillis un moyen connu de l'art antérieur consiste à utiliser des procédés d'estimation d'ambiance à deux dimensions, connu sous le nom de processeurs anti-Clutter, le terme "clutter" désignant le fouillis dans la terminologie anglo-saxone. Cependant, ces procédés similaires dans leur principe aux procédés de TFAC, travaillent en général en aval du filtrage doppler essentiellement pour assurer un taux de fausse alarme constant. D'autre part, comme dans le cas du TFAC la plupart de ces procédés opèrent un lissage du signal reçu dans les zones de transition, ce qui ne permet pas une délimitation nette des zones de fouillis. Cette absence de netteté rend difficile une gestion anticipée de la forme de l'onde émise.

Le document XP002317243 (IEE SEMINAR ON TEXTURE ANALYSIS IN RADAR AND SONAR - IEE LONDON UK 1993, PAGES 11-1 à 11-14 -), de F. BARBARESCO, intitulé "Statistical Segmentation of radar images", décrit par ailleurs un procédé de segmentation d'images radar de fouillis ou clutter, qui met en oeuvre un procédé de segmentation statistique utilisant l'amplitude ou le module du signal reçu. Le procédé décrit permet de déterminer de manière efficace les contours d'une zone de fouillis.

Le document XP010202546 (PROCEEDINGS OF THE INTERNATIONAL CONFERENCE ON IMAGE PROCESSING (ICIP) LAUSANNE, SEPT. 16 - 19, 1996, NEW YORK, IEEE, US, VOL. 1, 16 septembre 1996 (1996-09-16)1, pages 923-926) de F. Barbaresco & AI, intitulé "Motion-based segmentation and tracking of dynamic radar clutters" décrit quant à lui un procédé de segmentation et de pistage des images de fouillis ou clutter dynamiques à partir l'intensité du coefficient de réflexion, du signal reçu. Le procédé décrit permet de déterminer de manière efficace les contours d'une zone de fouillis et d'ensuivre efficacement les mouvements.

Le document XP010676755 (14 octobre 2003 (2003-10-14), PAGES 283-288) de F. BARBARESCO & AI, intitulé "Intelligent radar management by advanced beamscheduling algorithm based on short-time planning & constraints relaxation strategies" décrit quant à lui un procédé pour effectuer une gestion radar intelligente, mettant en oeuvre une gestion de formes d'ondes et un planificateur/cadenceur des formes d'ondes à émettre en fonction de la charge radar et de priorités des tâches radar à exécuter. Ce procédé permet de prendre en compte une situation donnée pour adapter la forme d'onde à émettre à cette situation.

Dans le but de résoudre le problème posé par le risque de perte d'une cible pistée dans une zone de fouillis, l'invention décrite propose un procédé de gestion adaptative de la forme d'onde émise. A cet effet l'invention comporte notamment une étape de cartographie doppler, cette cartographie fait appel à un procédé de segmentation statistique permettant de déterminer des zones de fouillis homogènes aux contours nets. Ce procédé de segmentation met en oeuvre un algorithme itératif de maximalisation de la moyenne stochastique ou "Stochastic Expectation Maximisation" (SEM) selon la dénomination anglo-saxonne. Il détermine ainsi un nombre N de zones de fouillis différentes. La mise en oeuvre d'un tel algorithme est notamment décrite dans la demande de brevet français 04 07810 déposé en juillet 2004 par la demanderesse.

A cet effet, l'invention consiste en un Procédé de gestion des formes d'ondes émise par un système de détection électromagnétique, caractérisé en ce qu'il comporte au moins:
- une étape de traitement du signal permettant la détection et le pistage de cibles d'intérêt,
- une étape de cartographie doppler des zones de fouillis présentes dans l'espace couvert par le système de détection, l'étape de cartographie doppler mettant en oeuvre un procédé de segmentation statistique des échantillons du signal reçu, le procédé permettant de découper l'espace en zones ayant un spectre doppler homogène
- une étape de gestion adaptative des formes d'ondes à émettre les deux premières étapes fournissent à l'étape les informations nécessaires pour déterminer la forme d'onde à émettre,

Le procédé selon l'invention combine avantageusement, lors de l'étape de gestion adaptative des formes d'ondes, les informations issues de la chaîne de traitement classique du signal reçu aux informations issues de la cartographie doppler pour élaborer, en fonction de la nature du fouillis présent dans la direction pointée par le système et les paramètres de la cible ou des cibles pistées, une forme d'onde permettant d'éviter le chevauchement des spectres du fouillis et de la cible pistée.

Dans une variante de mise en oeuvre de l'invention, le procédé de segmentation statistique met en oeuvre un algorithme SEM basé sur des chaînes de Markov Couple.

Les différentes caractéristiques et avantages liés à l'invention apparaîtront au travers de la description faîte en regard des figures annexées qui représentent:
- La figure 1, une illustration du problème posé,
- la figure 2 une illustration du principe d'action du procédé selon l'invention,
- la figure 3 un synoptique de mise en oeuvre du procédé selon l'invention,

Pour des raisons de clarté, la description qui suit se réfère de manière implicite au mode de fonctionnement des radars à impulsions modernes et aux notions connues de récurrence, ou période de répétition, de rafale, de cases distance et de modes de fonctionnement en rafale. Il est par ailleurs connu que les types de traitement du signal associés à ces radars sont des traitements à la rafale effectués sur l'axe distance. On rappelle simplement que la période de répétition T_{R} correspond à l'intervalle de temps compris entre deux instants d'émission d'une impulsion radar, temps durant lequel le récepteur du radar est actif et que cet intervalle de temps est échantillonné à un rythme correspondant au découpage en distance de la portée du radar en cases distance. A un échantillon de signal pris à un instant t, correspond ainsi une case distance donnée. D'autre part, les procédés de traitement généralement employés procèdent par association des signaux provenant de plusieurs impulsions d'émission successives constituant une rafale. Le nombre d'impulsions associées dans une rafale est notamment choisi de sorte que pendant le laps de temps correspondant, on considère que les paramètres associés à d'éventuels échos détectés restent inchangés. Le traitement à la rafale correspond sensiblement au traitement des signaux provenant d'un axe de pointage donné et est donc un traitement monodimensionnel sur l'axe distance. Le filtrage doppler entre dans le contexte des traitements effectués à la rafale. Le filtrage doppler produit un signal filtré pour chacune des cases distances en associant les échantillons de signal reçus à toutes les récurrences pour une case distance donnée, le filtrage doppler met en jeu. C'est un procédé de filtrage discret associé à une période d'échantillonnage égale à la période de répétition T_{R}.

La figure 1 illustre le problème posé par le caractère de traitement discret du filtrage doppler. La figure 1 présente un premier diagramme 1-a correspondant à l'exploitation d'une forme d'onde ayant une fréquence de répétition F_{R1} égale à 1/T_{R1} Sur la figure 1-a sont représentés de manière schématique les spectres d'un fouillis de sol 11, d'un fouillis atmosphérique 12 tel qu'un nuage par exemple. De façon connue, ces éléments ayant une vitesse ou bien nulle ou bien faible la fréquence doppler qui leur est associée est inférieure à F_{R1} et dépourvue d'ambiguïté. La figure 1-a présente également de manière schématique le spectre 13 résultant d'une cible et produite par le repliement de spectre occasionné par le filtrage doppler réalisé à la fréquence F_{R1}. On constate sur la figure que le spectre replié du signal correspondant à la cible se superpose au spectre du fouillis. Ainsi il n'est pas possible de procéder à l'élimination par simple filtrage du fouillis sans éliminer également la cible La figure 1-b montre en revanche que si, selon un principe connu, on modifie la valeur de la fréquence d'échantillonnage et que cette fréquence prend la valeur F_{R2}, le spectre du fouillis ne change pas, alors que le spectre replié 14 du signal correspondant à la cible se trouve déplacé et ne se superpose plus avec le spectre du fouillis atmosphérique.
Ce phénomène connu est à l'origine du procédé selon l'invention.

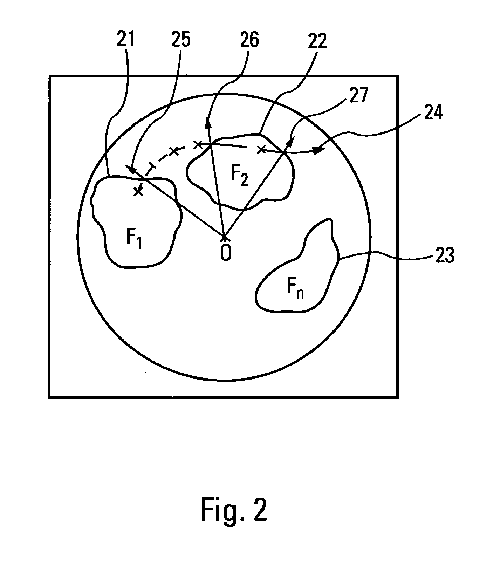

La figure 2 illustre sur un exemple le principe d'action du procédé selon l'invention. La figure 2 illustre un radar placé en un point O et pouvant observer l'ensemble de l'espace autour de lui. La figure 2 présente des zones de fouillis homogène 21, 22 et 23, fouillis atmosphérique par exemple, zones déterminée par leur spectre. La figure présente encore la trajectoire 24 suivie par une cible pistée par le radar. Dans l'exemple de la figure, on constate que la cible pistée traverse trois zones distinctes: une zone de fouillis F₁, une zone sans fouillis et une zone de fouillis F₂. Par ailleurs la cible étant pistée par le radar, son spectre est supposé connu. Dans une telle situation, à l'entrée de la cible dans une zone de fouillis donné, le procédé selon l'invention fait varier la forme d'onde émise de façon à garantir que le spectre de la cible et le spectre du fouillis ne se superposent pas et qu e le spectre du fouillis ne masque pas la cible. Ainsi dans l'exemple le procédé selon l'invention induit si nécessaire une modification de la forme d'onde à chaque changement de zone matérialisé par les axes 25, 26 et 27.

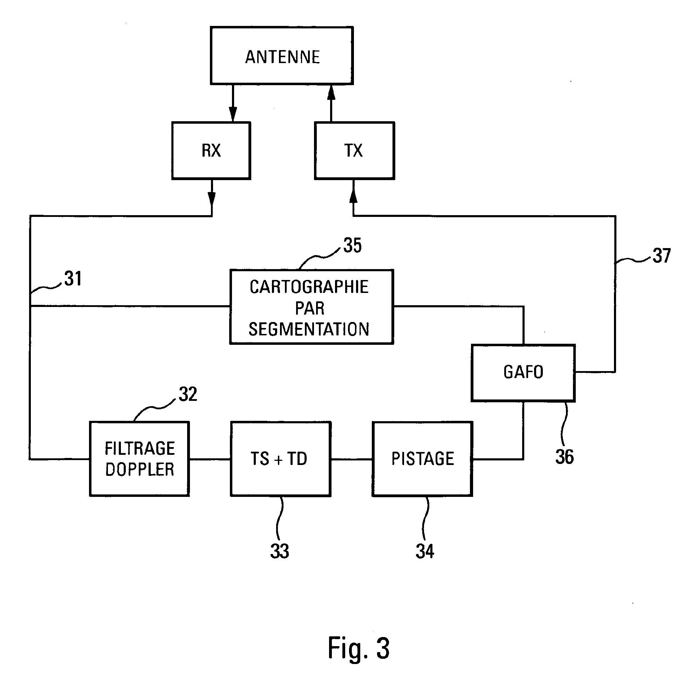

La figure 3 présente un synoptique de mise en oeuvre du procédé selon l'invention. Celui-ci comporte deux étapes parallèles. Dans une première étape, le procédé effectue une opération 32 filtrage doppler du signal reçu 31 dont la forme d'onde correspond à celle déterminée auparavant. Le signal filtré subit ensuite des opérations de traitement du signal et de traitement de données 33, et de pistage 34, correspondant à des opérations classiques permettant la détection et le pistage des cibles éventuelles. Parmi ces opérations on peut par exemple citer le TFAC, la compression d'impulsion ou encore la post intégration et la formation de plots radars.

L'étape parallèle 35 de cartographie doppler rend le procédé avantageux en ce qu'elle procède à la constitution de tour d'antenne à tour d'antenne des zones de fouillis homogènes. Cette opération met en oeuvre un procédé de segmentation statistique des données qui consiste à déterminer des classes statistiques de fouillis à partir des composantes réelles et imaginaires du signal reçu et démodulé. Ces classes de fouillis correspondent à des spectres doppler définis. Comme il a été dit précédemment, le procédé de segmentation met en oeuvre un algorithme itératif de type SEM semblable dans son principe à celui décrit dans la demande française précédente 04 07810.

Les résultats de l'opération de pistage 34 et de cartographie doppler 35 sont exploitées simultanément lors de l'étape 36 de détermination de la forme d'onde appropriée. L'opération de gestion adaptative de la forme d'onde à émettre (GAFO) prend en compte la chronométrie générale du radar, la direction pointée, les paramètres de la (ou des) cible(s) pistée(s) et l'information de cartographie doppler, pour déterminer la forme d'onde 37 à émettre, permettant de dissocier le spectre de la cible poursuivie du spectre du fouillis présent dans la zone.

Dans une variante de mise en oeuvre du procédé selon l'invention, l'algorithme de segmentation statistique utilisé pour l'étape 35 de cartographie doppler dans le procédé selon l'invention, peut différer de celui décrit dans la demande française 04 07810.

L'algorithme alors utilisé, est un algorithme de segmentation bayésienne non-supervisée, basée sur des chaînes de Markov Couple, et non sur des chaînes de Markov cachées, afin de modéliser la dépendance spatiale entre les cases distances. Les chaînes de Markov Couple sont une généralisation des chaînes de Markov cachées dont la particularité est de ne plus faire l'hypothèse d'indépendance des observations conditionnellement aux états. Cette notion de dépendance additionnelle est alors prise en compte dans l'algorithme par des fonctions aléatoires appelées copules. Les copules sont des fonctions qui permettent de décrire la dépendance stochastique entre variables aléatoires. On peut en effet écrire en toute généralité que la loi jointe de 2 variables aléatoires réelles X et Y s'écrit comme fonction des lois de X et Y. La liaison fonctionnelle entre ces probabilités est assurée par une fonction appelée la copule du couple X, Y. La copule est alors assimilé à la dépendance entre les variables.

L'intérêt de ce modèle est que les procédures d'estimation des classes et des paramètres par l'algorithme SEM ne sont que très légèrement modifiées par rapport aux procédures existantes pour le modèle à chaînes de Markov cachées, tout en restant plus générale Les modèles à chaînes de Markov cachées sont en effet un cas particulier de chaîne de Markov couple.

La construction d'une carte des fouillis Doppler est alors vue comme un problème de classification de processus stochastiques et non directement comme un problème de mesures des valeur I et Q du signal. De la sorte, il est possible d'estimer en premier lieu les paramètres d'un modèle auto-régressif, précisément celui des coefficients de réflexion, ce qui permet de résumer les caractéristiques temporelles du signal radar reçu pour chaque case distance, et d'avoir une indexation condensée d'un sous-ensemble de l'ensemble des processus stochastiques. Ces paramètres peuvent être classés à l'aide d'une chaîne couple en utilisant des lois paramétriques correctement choisis sur les espaces de processus auto-régressifs.

## Revendications

1. Procédé de gestion des formes d'ondes émise par un système de détection électromagnétique, **caractérisé en ce qu'**il comporte au moins:
- une étape (32, 33, 34) de traitement du signal permettant la détection et le pistage de cibles d'intérêt,
- une étape (35) de cartographie doppler des zones de fouillis présentes dans l'espace couvert par le système de détection,
l'étape de cartographie doppler mettant en oeuvre un procédé de segmentation statistique des échantillons du signal reçu, le procédé permettant de découper l'espace en zones ayant un spectre doppler homogène,
les deux étapes fournissant à une étape (36) de gestion adaptative des formes d'ondes les informations nécessaires pour déterminer la forme d'onde à émettre, en fonction de la nature du fouillis présent dans la direction pointée par le système et les paramètres de la cible ou des cibles pistées

## Claims

1. A process of managing waveforms emitted by an electromagnetic detection system, **characterised in that** it at least comprises:
- a signal processing step (32, 33, 34) allowing detection and tracking of targets of interest;
- a Doppler mapping step (35) of the cluster zones in the space covered by the detection system,
the Doppler mapping system implementing a statistical segmentation process of samples of the received signal, the process allowing the space to be divided into zones having a homogenous Doppler spectrum,
both steps providing an adaptive waveform management step (36) with the information required to determine the waveform to be emitted, as a function of the type of cluster present in the direction indicated by the system and the parameters of the target or the tracked targets.

## Patentansprüche

1. Verfahren zum Steuern von Wellenformen, die von einem elektromagnetischen Erkennungssystem emittiert werden, **dadurch gekennzeichnet, dass** es wenigstens Folgendes beinhaltet:
- einen Signalverarbeitungsschritt (32, 33, 34), der die Erkennung und Verfolgung von Zielen von Interesse ermöglicht;
- einen Schritt (35) der Doppler-Abbildung von in dem Raum vorhandenen Cluster-Zonen, die von dem Erkennungssystem abgedeckt werden,
wobei das Doppler-Abbildungssystem einen statistischen Segmentierungsprozess von Abtastwerten des empfangenen Signals ausführt, wobei der Prozess eine Unterteilung des Raums in Zonen mit einem homogenen Doppler-Spektrum zulässt,
wobei beide Schritte einen adaptiven Wellenformsteuerschritt (36) mit den Informationen versorgt, die zum Ermitteln der zu emittierenden Wellenform notwendig sind, in Abhängigkeit von dem Cluster-Typ, der in der von dem System angezeigten Richtung vorliegt, und von den Parametern des Ziels oder der verfolgten Ziele.
